(19) Europäisches Patentamt

European Patent Office

Office européen des brevets

(11) **EP 4 635 916 A2**

(12) **EUROPEAN PATENT APPLICATION**

(43) Date of publication:
**22.10.2025 Bulletin 2025/43**

(21) Application number: **25170772.5**

(22) Date of filing: **15.04.2025**

(51) International Patent Classification (IPC):
**C01F 7/023** *(2022.01)* **C01F 7/14** *(2022.01)*
**C08K 3/22** *(2006.01)*

(52) Cooperative Patent Classification (CPC):
**C01F 7/023; C01F 7/14; C09C 1/407;**
C01P 2002/74; C01P 2004/03; C01P 2004/32;
C01P 2004/61; C01P 2006/12; C01P 2006/14;
C01P 2006/22; C08K 2003/2227

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.04.2024 JP 2024067628**

(71) Applicant: **Sumitomo Chemical Co., Ltd.
Tokyo 103-6020 (JP)**

(72) Inventor: **MORITA, Seitaro
Niihama-shi, Ehime, 792-8521 (JP)**

(74) Representative: **Vossius & Partner
Patentanwälte Rechtsanwälte mbB
Siebertstrasse 3
81675 München (DE)**

(54) **INORGANIC ALUMINUM COMPOUND POWDER**

(57)      Provided is an inorganic aluminum compound powder that can sufficiently suppress increase in viscosity when added to a resin. An inorganic aluminum compound powder that satisfies the following formula (1):

$$V \ (cm^3/g) \ \times \ D50 \ (\mu m) \ \geq \ 0.11 \ (1)$$

wherein V is a specific mesopore volume of the inorganic aluminum compound powder ($cm^3/g$), and D50 is a particle size ($\mu$m) at which a cumulative frequency measured from a fine-grained side reaches 50% by volume in a volume-based particle size distribution of the inorganic aluminum compound powder.

**Description**

Technical Field

The present disclosure relates to an inorganic aluminum compound powder.

Background Art

It is known that an inorganic aluminum compound powder, such as an aluminum hydroxide powder, can be used as a filler for a resin molded body (for example, Patent Literature 1 and 2). A resin molded body containing an inorganic aluminum compound powder can be used as a thermal interface material (Thermal Interface Material: TIM), which fills the gap between an electronic component and a heat sink.

Patent Literature 1 discloses a method for producing an aluminum hydroxide powder that can be highly filled into a resin molded body, which is characterized by pulverizing aluminum hydroxide as a raw material.

Patent Literature 2 discloses an aluminum hydroxide powder as a filler for a resin molded body, having a density of 1.59 to 2.00 g/cm$^3$ when molded at 10 MPa and having a ratio of diffraction intensity of a (002) plane to diffraction intensity of a (110) plane in a XRD pattern of 2.0 to 7.5.

Citation List

Patent Literature

Patent Literature 1: Japanese Patent Laid-Open No. 2001-322813
Patent Literature 2: Japanese Patent Laid-Open No. 2023-009506

Summary of Invention

Problems to be Solved by Invention

In recent years, with the miniaturization and high-density mounting of electronic devices, a resin molded body with a better thermal conductivity is desired, and an inorganic aluminum compound powder that can achieve a higher filling rate is demanded. However, when an inorganic aluminum compound powder is highly filled into a resin material, it causes a problem that the viscosity of the mixed material increases and molding performance of the resin molded body deteriorates.

The present disclosure was made in view of the above circumstances, and one of the purposes thereof is to provide an inorganic aluminum compound powder that can sufficiently suppress an increase in viscosity when added to a resin.

Means to Solve the Problems

A first aspect of the present invention is
an inorganic aluminum compound powder that satisfies the following formula (1):

$$V \times D50 \geq 0.11 \quad (1)$$

wherein

V is a specific mesopore volume of the inorganic aluminum compound powder (cm$^3$/g), and
D50 is a particle size ($\mu$m) at which a cumulative frequency measured from a fine-grained side reaches 50% by volume in a volume-based particle size distribution of the inorganic aluminum compound powder.

A second aspect of the present invention is
the inorganic aluminum compound powder according to the first aspect, which is an aluminum hydroxide powder.

A third aspect of the present invention is
the inorganic aluminum compound powder according to the second aspect, which satisfies the following formula (2):

$$2.0 \leq I_{002}/I_{110} \leq 6.0 \quad (2)$$

wherein

$I_{110}$ and $I_{002}$ are peak diffraction intensities of a (110) plane and a (002) plane of aluminum hydroxide in an XRD pattern, respectively.

A fourth aspect of the present invention is

the inorganic aluminum compound powder according to any one of the first to the third aspects, wherein
D50 is 5 $\mu$m or more and 130 $\mu$m or less, and
a BET specific surface area is 0.5 $m^2$/g or more.

Effects of Invention

According to the embodiments of the present invention, it is possible to provide an inorganic aluminum compound powder that can sufficiently suppress an increase in viscosity when added to a resin.

Brief Description of Drawings

[Figure 1] Figure 1 is a graph plotting XRD indices on the vertical axis and structural parameters (V × D50) on the horizontal axis for inorganic aluminum compound powders (aluminum hydroxide) of the Examples and Comparative Examples.
[Figure 2A] Figure 2A shows SEM images of inorganic aluminum compound particles constituting an inorganic aluminum compound powder (aluminum hydroxide powder) of Example 1.
[Figure 2B] Figure 2B shows SEM images of inorganic aluminum compound particles constituting an inorganic aluminum compound powder (aluminum hydroxide powder) of Example 3.
[Figure 3A] Figure 3A shows SEM images of inorganic aluminum compound particles constituting an inorganic aluminum compound powder (aluminum hydroxide powder) of Comparative Example 1.
[Figure 3B] Figure 3B shows SEM images of inorganic aluminum compound particles constituting inorganic aluminum compound powders (aluminum hydroxide powder) of Comparative Example 2 and Comparative Example 3.

Embodiments for Carrying out Invention

The present inventor has conducted intensive studies from various perspectives in order to realize an inorganic aluminum compound powder that can sufficiently suppress an increase in viscosity when added to a resin (hereinafter also referred to as "resin viscosity"). As a result, the inventor found that the increase in resin viscosity can be sufficiently suppressed by controlling within a specified range the product of a specific mesopore volume V ($cm^3$/g) of the inorganic aluminum compound powder and a particle size D50 ($\mu$g), at which a cumulative frequency measured from a fine-grained side reaches 50% by volume in a volume-based particle size distribution of the inorganic aluminum compound powder (V × D50 ($\mu$m·$cm^3$/g)), thus completing the present invention.
Details regarding the inorganic aluminum compound powder for the embodiments of the present invention are shown below.

<1. Inorganic aluminum compound powder>

An inorganic aluminum compound powder according to the embodiments of the present invention satisfies the following formula (1):

$$V \times D50 \geq 0.11 \quad (1)$$

wherein:

V is a specific mesopore volume of the inorganic aluminum compound powder ($cm^3$/g), and
D50 is a particle size ($\mu$m) at which a cumulative frequency measured from a fine-grained side reaches 50% by volume in a volume-based particle size distribution of the inorganic aluminum compound powder.

Herein, the product of the specific mesopore volume $V$ ($cm^3/g$) and D50 ($\mu m$) ($V \times D50$ ($\mu m \cdot cm^3/g$)) is referred to as a "structural parameter". The structural parameter is an index that indirectly indicates a roundness of inorganic aluminum compound particles constituting the inorganic aluminum compound powder, and if the structural parameter is high, the inorganic aluminum compound particles can be said to be rounded (with fewer angular protrusions). An inorganic aluminum compound powder consisting of rounded inorganic aluminum compound particles tends to be capable of reducing resin viscosity. Therefore, by controlling the structural parameter ($V \times D50$) of the inorganic aluminum compound powder to be 0.11 ($\mu m \cdot cm^3/g$) or higher, the resin viscosity can be controlled to an appropriate range.

To explain the meaning of formula (1), characteristics of surface morphology of the inorganic aluminum compound powder and a method for preparing the inorganic aluminum compound powder according to the embodiments of the present invention will be described.

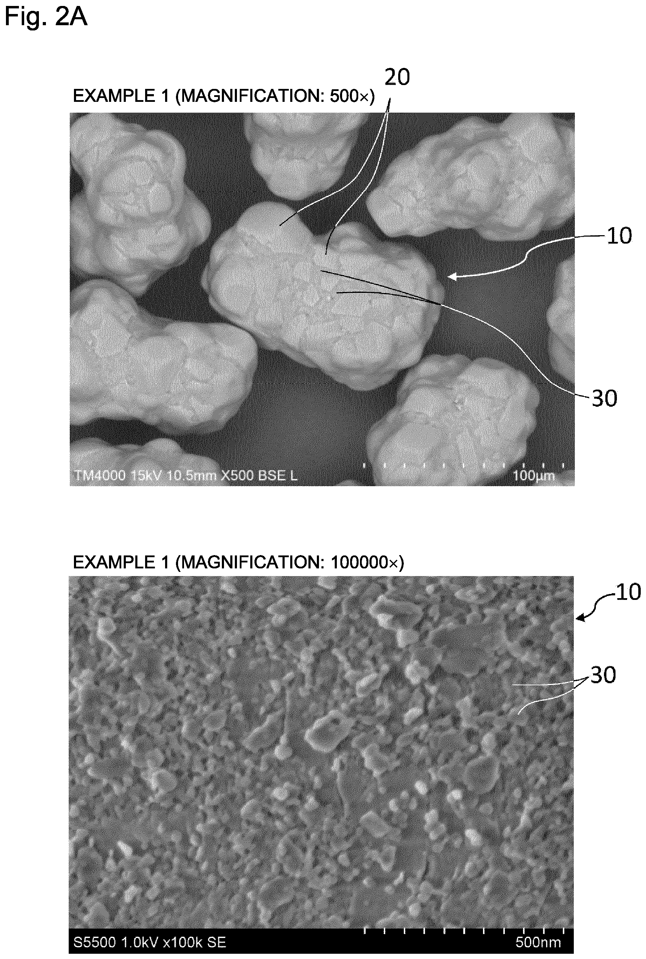

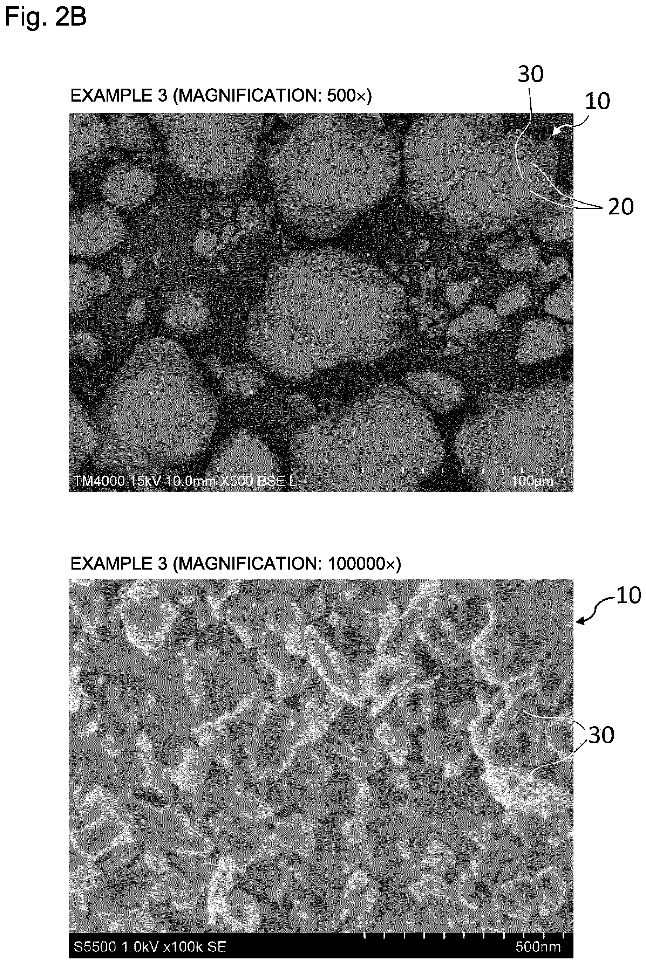

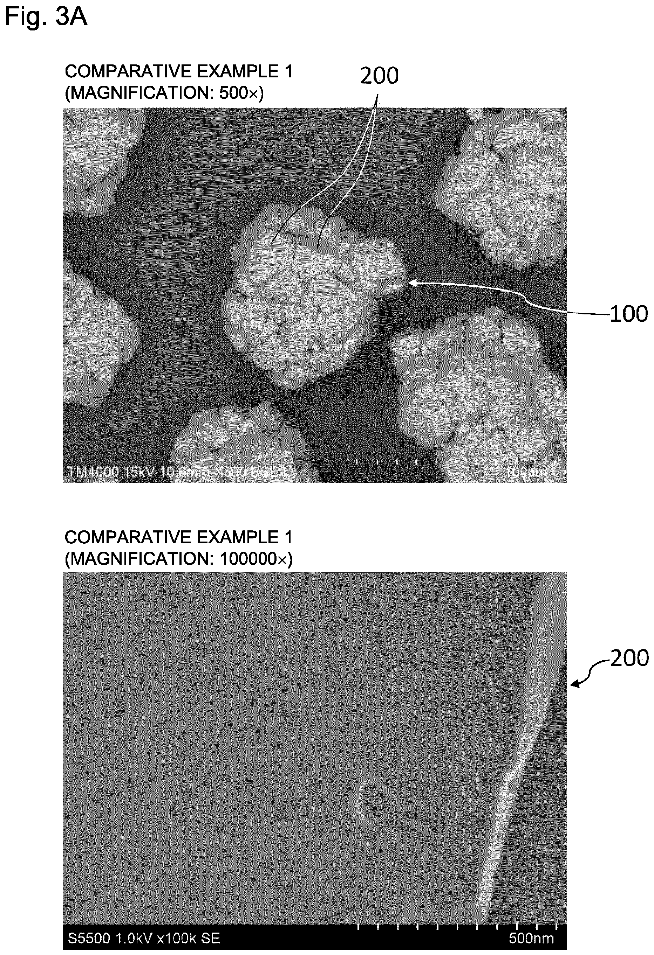

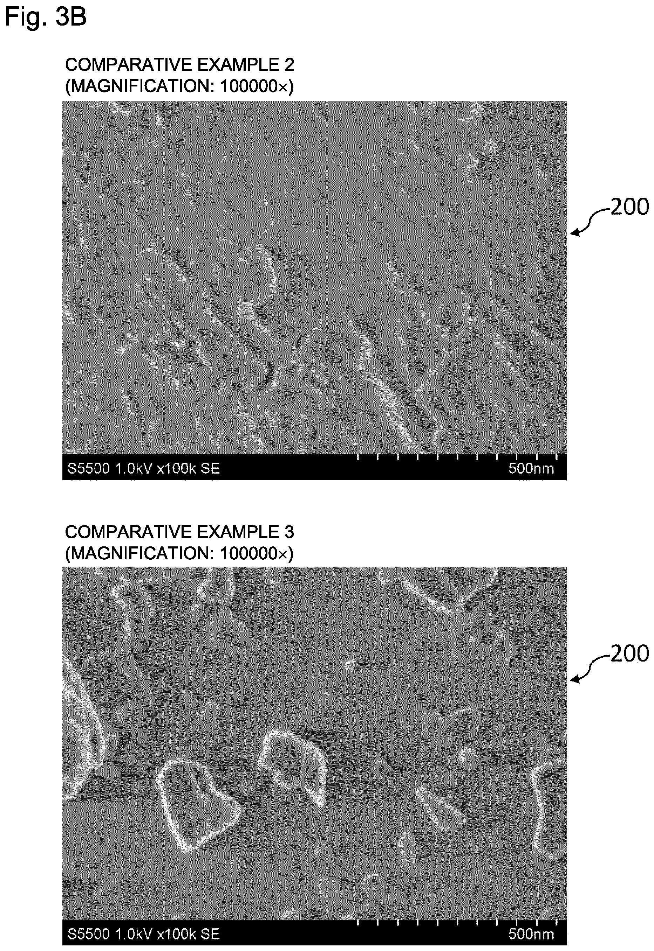

Figure 2A and Figure 2B are SEM images of inorganic aluminum compound powders (aluminum hydroxide powders of Examples 1 and 3) according to the embodiments and the surface shape of the inorganic aluminum compound particles (aluminum hydroxide particles) 10 constituting the inorganic aluminum compound powder can be observed. Figure 3A and Figure 3B are SEM images of raw material powders (aluminum hydroxide powders of Comparative Examples 1 to 3) used as raw materials for the inorganic aluminum compound powder, and the surface shape of the raw material particles 100 constituting the raw material powder can be observed.

The raw material particle 100 shown in the upper SEM image (magnification: 500×) in Figure 3A has been made by a conventional producing method and is basically an aggregate of multiple small particles 200. Since the individual small particles 200 are angular, the raw material particle 100 has a surface morphology with angular protrusions and deep recesses between adjacent small particles 200. In addition, from the lower SEM image in Figure 3A and two SEM images in Figure 3B (both magnification: 100000×), it can be observed that the surface of each small particle 200 is a smooth crystalline surface.

Since the raw material particles 100 have an uneven surface morphology with protrusions and recesses, the resin viscosity of the raw material powder consisting of the raw material particles 100 tends to be high.

On the other hand, SEM images (magnification: 500×) on the upper side of Figure 2A and the upper side of Figure 2B show the inorganic aluminum compound particles 10 according to the embodiments of the present invention, which are obtained by performing an abrasive treatment (a process that abrades the surface of the raw material particles 100) on the raw material particles 100 of the inorganic aluminum compound (see Figure 3A). Through the abrasive treatment, the angular small particles 200 (see Figure 3A) of the raw material particle 100 become rounded small particles 20, and the deep recesses between the small particles 200 (see Figure 3A) in the raw material particle 100 are filled by fine abrasion particles 30. As a result, the inorganic aluminum compound particles 10 have an overall rounded surface morphology. In addition, as shown in the lower SEM image of Figure 2A and the lower SEM image of Figure 2B (both magnification: 100000×), there are a lot of abrasion particles 30 adhered to the surface of each of the small particles 20.

Since the inorganic aluminum compound particles 10 have a less uneven surface morphology with fewer protrusions and recesses, the resin viscosity of the inorganic aluminum compound powder consisting of the inorganic aluminum compound particles 10 tends to be low.

A pore structure is formed in the inorganic aluminum compound particles 10 by the recesses between adjacent small particles 20 and the abrasion particles present on the surface of the small particles 20. Therefore, if the pore volume of the inorganic aluminum compound powder is large, it suggests that the inorganic aluminum compound particles 10 constituting the inorganic aluminum compound powder are rounded due to progress of the abrasion.

Next, the abrasive treatment for producing inorganic aluminum compound particles as shown in Figure 2A and Figure 2B from the raw material particles shown in Figure 3A will be described.

The "abrasive treatment" herein is carried out by agitating the raw material powder under agitation conditions that suppress pulverization of the raw material particles 100 themselves while abrading the angular protrusions of the raw material particles 100 shown in Figure 3A (sometimes referred to as "abrasive agitation"). In other words, the "abrasive treatment" herein is to agitate (perform abrasive agitation) under significantly milder agitation conditions compared to pulverizing conditions employed in the conventional method for producing the aluminum hydroxide powder. Since the abrasive treatment suppresses pulverization of the raw material particles 100, the angular protrusions are worn away and the particles as a whole become rounded. The amount of abrasion carried out by the abrasive treatment can be controlled, for example, by the agitation time.

Abrasion particles resulting from the abrasion of the angular protrusions adhere to the surface of the raw material particles, some of which clog the deep recesses of the raw material particles. As a result, overall rounded inorganic aluminum compound particles 10 (see Figure 2A and Figure 2B) are obtained.

The amount of abrasion particles generated by the abrasive treatment is an indicator of the degree of abrading the angular protrusions of the raw material particles 100 (Figure 3A), which is the degree of roundness of the inorganic aluminum compound particles 10.

As described above, the adhesion of abrasion particles to the inorganic aluminum compound particles (including clogging in recesses) forms a pore structure on the particle surface, increasing the pore volume of the inorganic aluminum compound powder. The present inventor considered using the pore volume of the inorganic aluminum compound powder (pore volume of a specified pore radius in the adsorption/desorption isotherm with nitrogen) as an indicator of the amount of abrasion particles adhered to the inorganic aluminum compound particles 10, and as a result, found that the pore volume (mesopore volume) equivalent to a pore radius of 1.4 to 94 nm (so-called mesopores) correlates with the amount of abrasion particles adhered. That is, the specific mesopore volume V ($cm^3/g$) (mesopore volume per 1 gram of inorganic aluminum compound powder) is considered to be largely contributed by the abrasion particles adhered to the inorganic aluminum compound particles 10.

Herein, the "specific mesopore volume" of the inorganic aluminum compound powder refers to the pore volume measured by the measurement method to be described later, and does not mean that the inorganic aluminum compound particles 10 necessarily have mesopores. In the embodiments of the present invention, the value of the specific mesopore volume is considered to be related to the amount of abrasion particles adhered to the inorganic aluminum compound particles 10.

As a result of further study by the inventor, it was confirmed that the specific mesopore volume of the inorganic aluminum compound powder is affected not only by the amount of abrasion particles adhered to the inorganic aluminum compound particles 10, but also by the particle diameter of the inorganic aluminum compound powder. Therefore, in order to eliminate the effect of particle diameter on the specific mesopore volume, it was decided to introduce the product of the specific mesopore volume V of the inorganic aluminum compound powder multiplied by the D50 of the inorganic aluminum compound powder (V × D50: structural parameter) as an indirect indicator of the roundness of the inorganic aluminum compound particles 10.

The inorganic aluminum compound particles 10 with high structural parameters are rounded, and the inorganic aluminum compound powder containing such inorganic aluminum compound particles 10 can effectively suppress an increase in resin viscosity.

Formula (1) above specifies that the structural parameter V × D50 is 0.11 ($\mu$m·$cm^3/g$) or higher. By satisfying the formula (1), an inorganic aluminum compound powder containing rounded inorganic aluminum compound particles as shown in Figure 2A and Figure 2B can be obtained.

The structural parameter can be controlled by changing the agitation time in the abrasive treatment (agitating the raw material powder) of the raw material particles 100 performed during the production of the inorganic aluminum compound powder. When the agitation time is increased, the specific mesopore volume V increases and the structural parameter becomes higher because the abrasion of the raw material particles 100 progresses resulting in increased amount of abrasion particles generated, and an increased amount of abrasion particles adhered to the inorganic aluminum compound particles 10.

The structural parameter of the inorganic aluminum compound powder is 0.11 ($\mu$m·$cm^3/g$) or higher, more preferably 0.15 ($\mu$m·$cm^3/g$) or higher, further more preferably 0.30 ($\mu$m·$cm^3/g$) or higher, and especially preferably 0.80 ($\mu$m·$cm^3/g$) or higher.

The upper limit of the structural parameter is not particularly restricted. Based on the inventor's study results, it is estimated that if the structural parameter increases to 3.0 to 4.0 ($\mu$m·$cm^3/g$), the effect of suppressing the resin viscosity is saturated. From the viewpoint of maximizing the suppression of resin viscosity while controlling production costs, the structural parameter is preferably 4.0 ($\mu$m·$cm^3/g$) or less. The structural parameter may be 3.0 ($\mu$m·$cm^3/g$) or less, for example, or may be 1.1 ($\mu$m·$cm^3/g$) or less.

The specific mesopore volume V ($cm^3/g$) is determined as described below.

As a pretreatment, the inorganic aluminum compound powder is vacuum degassed at 120 °C for 8 hours. An appropriate pretreatment equipment (for example, BELPREP-VAC II (manufactured by MicrotracBEL Corp.)) can be used for the pretreatment. Then, the adsorption/desorption isotherm with nitrogen is measured for the pretreated inorganic aluminum compound powder using a measuring instrument (for example, BELSORP-MINI II (manufactured by MicrotracBEL Corp.)) by the constant volume method. The adsorption temperature is 77 K, the adsorbate cross-sectional area is 0.162 $nm^2$, and the equilibrium waiting time (waiting time after the pressure change during adsorption/desorption reaches a state below a predetermined value) is 500 seconds. The amount of nitrogen adsorbed in mesopores equivalent to a pore radius of 1.4 to 94 nm is calculated based on the BJH method (Barrett, Joyner and Halenda method) as the specific mesopore volume of the inorganic aluminum compound powder.

As described above, during the production of the inorganic aluminum compound powder, the raw material particles 100 are agitated (abrasive agitation) under agitation conditions that do not (or are unlikely to) cause pulverization of the raw material particles 100, to conduct abrasive treatment. Therefore, the inorganic aluminum compound powder according to the present embodiments tends to have a relatively sharp particle size distribution because it is produced without going through a pulverization process. For example, the particle size distribution of the inorganic aluminum compound powder can satisfy the following formula (3):

$$(D90 - D10)/D50 \leq 3.0 \quad (3)$$

wherein D10, D50, and D90 are the particle diameters ($\mu$m) at which a cumulative frequency from the fine-grained side in the volume-based particle size distribution of the inorganic aluminum compound powder is 10% by volume, 50% by volume, and 90% by volume, respectively. (D90 - D10)/D50 may be 0.5 or more and 2.5 or less, and may be 0.6 or more and 2.0 or less. The lower limit of (D90 - D10)/D50 may be 0.7 or more.

D10, D50 and D90 are determined as described below.

An inorganic aluminum compound powder is added to a 0.2% by mass aqueous solution of sodium hexametaphosphate and irradiated with ultrasonic wave of 25 W output for 15 seconds (120 seconds if D50 is 15 $\mu$m or less) to disperse the inorganic aluminum compound powder in an aqueous solution. The volume-based particle size distribution is measured using a laser scattering particle size analyzer, and the particle diameters with a cumulative frequency of 10% by volume, 50% by volume, and 90% by volume from the fine-grained side (D10, D50, and D90, respectively) are determined. For the laser scattering particle size distribution analyzer, Microtrac MT-3300EXII (manufactured by NIKKISO CO., LTD.) or an equivalent analyzer is preferred, considering inter-instrumental differences and consistency with Examples and the like. It is preferable that the concentration of the inorganic aluminum compound powder is adjusted appropriately to a concentration that can be measured by the measuring instrument described above before measuring the particle size distribution.

The inorganic aluminum compound powder is, for example, an aluminum hydroxide powder. The aluminum hydroxide powder is suitable for heat-dissipating components because of its high heat dissipation and excellent flame retardancy.

When the inorganic aluminum compound powder is the aluminum hydroxide powder, it is preferable that the following formula (2) is satisfied:

$$2.0 \leq I_{002}/I_{110} \leq 6.0 \quad (2)$$

wherein

$I_{110}$ and $I_{002}$ are peak diffraction intensities of a (110) plane and a (002) plane of aluminum hydroxide in an XRD pattern, respectively.

The middle part of formula (2), "$I_{002}/I_{110}$", indicates the intensity ratio of the peak diffraction intensity of the (002) plane to the peak diffraction intensity of the (110) plane of aluminum hydroxide. Herein, this intensity ratio $I_{002}/I_{110}$ is sometimes referred to as an "XRD index".

The XRD index is an indicator of the degree to which a cleavage plane is exposed on the surface of the aluminum hydroxide particles constituting the aluminum hydroxide powder, in other words, an indicator of the degree of pulverization during the production of the aluminum hydroxide powder.

Formula (2) specifies that the XRD index is preferably 2.0 or higher and 6.0 or less.

If the XRD index is 6.0 or less, it suggests that the formation of plate-like shaped particles due to pulverization is suppressed in the aluminum hydroxide particles constituting the aluminum hydroxide powder. Therefore, aluminum hydroxide particles with an XRD index of 6.0 or less can further suppress resin viscosity.

If the XRD index is 2.0 or higher, it can ease the settings of manufacturing conditions and especially improve productivity.

The XRD index is preferably 2.0 or higher and 6.0 or less, more preferably 2.5 or higher and 5.5 or less, and especially preferably 2.8 or higher and 4.0 or less.

The XRD index can also be affected by crystal grain orientation (for example, particle shape), but for the XRD index to exceed 6.0, not only crystal grain orientation, but also cleavage is considered to make a significant contribution.

The XRD index is determined as described below.

An aluminum hydroxide powder is lightly filled into a 1 mm-deep measuring resin cell to avoid compaction, and the surface is flattened. Then the XRD pattern is measured using an X-ray powder diffractometer (for example, D8 ADVANCE manufactured by Bruker Corporation) with a step width of 0.02 deg, scan speed of 2.5 s/step, acceleration voltage of 40 kV, and acceleration current of 40 mA. Cu-K$\alpha$ is used as the X-ray source. In the obtained XRD pattern, a peak appearing in the range of $2\theta$ = 17.50 to 19.00° is defined as the peak of the (002) plane, and a peak appearing in the range of $2\theta$ = 20.00 to 20.42° is defined as the peak of the (110) plane, and the intensity ratio (XRD index) of the peak diffraction intensity $I_{002}$ (peak height) of the peak on the (002) plane to the peak diffraction intensity $I_{110}$ (peak height) of the peak on the (110) plane is determined.

For the inorganic aluminum compound powder, it is preferable that D50 is 5 $\mu$m or more and 130 $\mu$m or less. When D50 is 130 $\mu$m or less, the inorganic aluminum compound powder can be produced relatively easily, and when D50 is 5 $\mu$m or more, the filling rate of the inorganic aluminum compound powder to a resin material can be further improved.

D50 of the inorganic aluminum compound powder is preferably 10 $\mu$m or more and 120 $\mu$m or less, and more preferably 55 $\mu$m or more and 84 $\mu$m or less.

For the inorganic aluminum compound powder, it is preferable that the BET specific surface area is 0.5 m$^2$/g or more, and sufficient pore volume is formed by the abrasion particles, which can effectively suppress increase in resin viscosity.

Although the upper limit of the BET specific surface area is not particularly specified, if it exceeds 5.0 m$^2$/g, it is expected that the effect of suppressing resin viscosity will be saturated. Therefore, the upper limit may be set at 5.0 m$^2$/g, thereby maximizing the effect of resin viscosity suppression while controlling production costs.

The BET specific surface area of the inorganic aluminum compound powder is more preferably 0.5 m$^2$/g or more and 5.0 m$^2$/g or less, and is especially preferably 2.0 m$^2$/g or more and 4.0 m$^2$/g or less.

The BET specific surface area is determined by the nitrogen adsorption method using a fully automatic specific surface area analyzer (for example, Macsorb HM-1201 manufactured by Mountech Co., Ltd.) according to the method specified in JIS-Z-8830:2013.

The inorganic aluminum compound powder according to the embodiments of the present invention can sufficiently suppress an increase in viscosity when added to a resin and is suitable as a filler for a resin molded body.

Examples of resins applicable to the formation of the resin molded body include thermosetting resins such as unsaturated polyester resin, epoxy resin, phenolic resin, and polyurethane resin, as well as thermoplastic resins such as polyethylene, polypropylene, copolymer of ethylene and propylene, polyolefin represented by copolymer of ethylene and/or propylene with other $\alpha$-olefin such as 1-butene, 1-pentene, 1-hexene, 1-heptene, 1-octene, 1-nonene, 4-methyl-1-pentene, and 1-decene, styrene (co)polymer, methyl methacrylate (co)polymer, polyamide, polycarbonate, ethylene-vinyl acetate copolymer, polyacetal, acrylonitrile-butadienestyrene copolymer, polyphenylene oxide, polyethersulfone, polyarylate, polyether ether ketone, and polymethylpentene. The inorganic aluminum compound powder according to the embodiments of the present invention can be used as a filler not only for the resins described above and also other synthetic resins, natural resins, paper and the like.

<2. Method for producing the inorganic aluminum compound powder>

The method for producing the inorganic aluminum compound powder according to the embodiments of the present invention includes steps of (a) preparing a raw material aluminum compound powder having a D50 of 50 to 200 $\mu$m (step of preparing raw material powder) and (b) agitating the raw material aluminum compound powder (abrasive agitation) to abrade the surface of the raw material aluminum compound particles (step of abrasive treatment of raw material particles). Each step will be described in detail below, using an aluminum hydroxide powder as an example. It is understand that the conditions discussed below apply to all embodiments of the present invention and not only to aluminum hydroxide powder.

[(a) Step of preparing raw material powder]

An aluminum hydroxide powder to be used as a raw material (hereinafter also referred to as "raw material aluminum hydroxide powder" or "raw material powder") is prepared. It is preferable that the raw aluminum hydroxide powder has D50 of 50 to 200 $\mu$m. This makes it easier to obtain the aluminum hydroxide powder with a desired structural parameter (V $\times$ D50).

The crystal structure of the raw material aluminum hydroxide powder is, for example, gibbsite type, and bayerite type, and is preferably gibbsite type.

The raw material aluminum hydroxide powder (raw material powder) can be produced by adding seed crystals to a supersaturated sodium aluminate solution, precipitating aluminum hydroxide with agitating, filtering and washing the resulting aluminum hydroxide, followed by aftertreatment such as drying, disintegration, and pulverization. With this method, the raw material aluminum hydroxide powder having the particle diameter described above is obtained. A commercially available aluminum hydroxide powder may also be used provided that it satisfies the particle diameter described above.

[(b) Step of abrasive treatment of raw material particles]

The raw material aluminum hydroxide particles (hereinafter referred to as "raw material particles") in the raw material powder are rubbed against each other by agitating the raw material aluminum hydroxide powder (raw material powder) with appropriate stress applied. This abrades (or grinds) the angular protrusions on the surface of the raw material particles to generate abrasion particles, thus producing aluminum hydroxide particles that are rounded as a whole (see Figure 2).

In the producing method for an aluminum hydroxide powder disclosed in Patent Literatures 1 and 2, the raw material particles are pulverized by mixing while applying high pressure to the raw material powder. In contrast, in the embodiments of the present invention, the pressure applied to the raw material powder during agitation is daringly kept low, thereby suppressing pulverization of the raw material particles during agitation. Since agitation (abrasive agitation) is performed while the pressure is kept low, abrasion progresses slowly. Therefore, to achieve sufficient abrasion, the agitation time should be relatively long.

Examples of devices suitable for the abrasive treatment (abrasive agitation) to abrade the surface of raw material particles include planetary mixers (for example, planetary centrifugal mixer with defoaming performance Awatori Rentaro ARV-310 manufactured by THINKY CORPORTION) and twin blade kneaders (for example, batch-type closed roller mixer, Labo Plastomill R100 manufactured by Toyo Seiki Seisaku-sho Ltd.). These devices are typically used for kneading resins. However, based on the inventor's study, it was found that they are suitable for abrading the surface of the raw material particles without pulverizing them, because they can agitate the raw material powder while applying appropriate stress.

Suitable conditions for the abrasive agitation of the raw material particles using each device will be described below.

(b-1) Planetary mixer

The abrasive agitation using a planetary mixer is preferably controlled according to the following (1-i) to (1-iv).

(1-i) The revolution speed is set between 200 and 2000 rpm (for example, 2000 rpm) to compact the raw material powder through centrifugal force. The compaction is preferably performed so that a filling rate of the actual volume of the raw material powder against the volume (bulk) of the raw material powder when the raw material powder is fed into the mixer is 35 to 85% by volume during treatment. Abrasion is less likely to progress when the filling rate is less than 35% by volume, and mixing is difficult when the filling rate is more than 85% by volume.

(1-ii) The rotational speed of the rotation is set between 100 and 1000 rpm (for example, 1000 rpm) to agitate the raw material powder at high speed.

(1-iii) Flow rate of the raw material powder in the mixer. It is desirable to flow the particles at 0.01 to 100 m/sec. If the flow rate is too low, there is a risk of inducing cracking (cleavage) of the raw material particles and the abrasive treatment becomes inefficient. If the flow rate is too high, it is difficult to perform the step. The flow rate can be controlled by the rotational speed of the rotation.

(1-iv) Exercise control to achieve an appropriate water content for the raw material powder at the time of the abrasive agitation. For the raw material powder of 100% by mass (including water), it is desirable to contain water in an amount of 0 to 30% by mass as a lubricating component (i.e., water content of 0 to 30% by mass). If the water content is too high, abrasion may be suppressed and the efficiency of the abrasive treatment may be reduced.

(b-2) Twin blade kneader

The abrasive agitation using a twin blade kneader is preferably controlled according to the following (2-i) to (2-iii).

(2-i) It is preferable to fill the raw material powder to achieve a filling rate of 35 to 85% by volume in terms of dry raw material powder in the mixer (for example, 58% by volume). Then the raw material particles can be in a state of moderate friction with each other. Abrasion is less likely to progress when the filling rate is less than 35% by volume, and mixing is difficult when the filling rate is more than 85% by volume.

(2-ii) Flow rate of the raw material powder in the kneader by rotating the blade at a speed of 5 to 500 rpm (for example, 40 rpm). It is desirable to flow the powder at 0.01 to 100 m/sec. If the flow rate is too low, there is a risk of inducing cracking (cleavage) of the raw material particles and the treatment becomes inefficient. If the flow rate is too high, it is difficult to perform the abrasive agitation.

(2-iii) Exercise control to achieve an appropriate water content for the raw material powder at the time of the abrasive agitation. For the raw material powder of 100% by mass (including water), it is desirable to contain water in an amount of 0 to 30% by mass as a lubricating component (i.e., water content of 0 to 30% by mass). If the water content is too high, abrasion may be suppressed and the efficiency of the abrasive treatment may be reduced.

The method for producing aluminum compound powder according to the embodiments of the present invention may include other steps (for example, surface treatment step) within a scope in which the purpose of the present invention can be achieved.

Examples

The embodiments of the present invention will be described in more detail with reference to the Examples below. The embodiments of the present invention are not limited by the Examples below, and may be implemented by adding modifications as appropriate within a scope in which they conform to the purposes described above and below, all of which are included within the technical scope of the embodiments of the present invention.

(Example 1)

Seed crystals were added to a supersaturated sodium aluminate solution, and aluminum hydroxide was precipitated with agitating. The resulting aluminum hydroxide was filtered, washed, and dried to obtain a raw material aluminum hydroxide powder (D50: 85 $\mu$m).

To 100 parts by mass of the obtained raw material aluminum hydroxide powder, 15 parts by mass of water was added, and the mixture was agitated at 1000 rpm for rotation and 2000 rpm for revolution using a planetary centrifugal mixer (Awatori Rentaro ARV-310 manufactured by THINKY CORPORTION) for 1 minute to perform an abrasive agitation at high speed (locally at a maximum of about 5 m/sec) while filling particles in a dense state with each other (abrasive treatment). The powder was then loosened with a medicine spoon. This process of abrasive agitation and loosening was repeated 10 times. The resulting powder was dried at 110 °C for 2 hours or more to obtain an aluminum hydroxide powder of Example 1.

(Example 2)

A commercially available aluminum hydroxide powder (CW-308 (D50 = 11 $\mu$m) manufactured by SUMITOMO CHEMICAL COMPANY, LIMITED) was used as a raw material aluminum hydroxide powder.

To 100 parts by mass of the raw material aluminum hydroxide powder, 15 parts by mass of water was added, and the mixture was put in a disposable cup. Then the mixture was agitated at 1000 rpm for rotation and 2000 rpm for revolution using a planetary centrifugal mixer (Awatori Rentaro ARV-310 manufactured by THINKY CORPORTION) for 1 minute to perform an abrasive agitation at high speed (locally at a maximum of about 5 m/sec) while filling particles in a dense state with each other (abrasive treatment). The powder was then loosened with a medicine spoon. This process of abrasive agitation and loosening was repeated 5 times. The resulting powder was dried at 110 °C for 2 hours or more to obtain an aluminum hydroxide powder of Example 2.

(Example 3)

Seed crystals were added to a supersaturated sodium aluminate solution, and aluminum hydroxide was precipitated with agitating. The resulting aluminum hydroxide was filtered, washed, and dried to obtain a raw material aluminum hydroxide powder (D50: 73 $\mu$m).

To 100 parts by mass of the obtained raw material aluminum hydroxide powder, 15 parts by mass of water was added. Using a batch-type closed roller mixer (Labo Plastomill R100 manufactured by Toyo Seiki Seisaku-sho Ltd.), the wet powder was prepared in the closed sample chamber to achieve a filling rate of 58% by volume in terms of a dry raw material powder, and was abrasion-agitated at a 2-blade rotation speed of 40 rpm for 30 minutes (abrasive treatment). The resulting powder was dried at 110 °C for 2 hours or more to obtain an aluminum hydroxide powder of Example 3.

(Comparative Example 1)

The raw material aluminum hydroxide powder (D50: 85 $\mu$m) prepared in Example 1 was used as an aluminum hydroxide powder of Comparative Example 1.

(Comparative Example 2)

A commercially available aluminum hydroxide powder (CW-308 (D50 = 11 $\mu$m) manufactured by SUMITOMO CHEMICAL COMPANY, LIMITED) was used as an aluminum hydroxide powder of Comparative Example 2.

(Comparative Example 3)

A commercially available aluminum hydroxide powder (C-305 (D50 = 5.3 $\mu$m) manufactured by SUMITOMO CHEMICAL COMPANY, LIMITED) was used as an aluminum hydroxide powder of Comparative Example 3.

For the aluminum hydroxide powders of Examples 1 to 3 and Comparative Examples 1 to 3, specific mesopore volume V, D10, D50, D90, XRD index ($I_{002}/I_{110}$), the BET specific surface area, and resin viscosity were determined by the following methods. In addition, structural parameter (V $\times$ D50) and particle size distribution (D90 - D10)/D50 were calculated from the measurement results. The measurement results and calculation results are shown in Table 1.

[Specific mesopore volume V]

As a pretreatment, the aluminum hydroxide powder was vacuum degassed at 120 °C for 8 hours. BELPREP-VAC II (manufactured by MicrotracBEL Corp.) was used for the pretreatment. Then, an adsorption/desorption isotherm with nitrogen was measured for the pretreated aluminum hydroxide powder using BELSORP-MINI II (manufactured by MicrotracBEL Corp.) in a constant volume method. The adsorption temperature was 77 K, the adsorbate cross-sectional area was 0.162 nm$^2$, and the equilibrium waiting time was 500 seconds. The amount of nitrogen adsorbed in mesopores equivalent to a pore radius of 1.4 to 94 nm was calculated based on the BJH method as the specific mesopore volume.

[D10, D50 and D90]

The aluminum hydroxide powder was added to a 0.2% by mass aqueous solution of sodium hexametaphosphate and irradiated with ultrasonic wave of 25 W output for 15 seconds (120 seconds if D50 is 15 $\mu$m or less) to disperse the aluminum hydroxide powder in the aqueous solution. The volume-based particle size distribution was measured using a laser scattering particle size analyzer, and the particle diameters with a cumulative frequency of 10% by volume, 50% by volume, and 90% by volume from the fine-grained side (D10, D50, and D90, respectively) were determined. For the laser scattering particle size distribution analyzer, Microtrac MT-3300EXII (manufactured by NIKKISO CO., LTD.) was used. The concentration of the aluminum hydroxide powder was adjusted appropriately to a concentration that can be measured by the measuring instrument described above when measuring the particle size distribution.

[XRD index ($I_{002}/I_{110}$)]

The aluminum hydroxide powder was lightly filled into a 1 mm-deep measuring resin cell to avoid compaction, and the surface was flattened. Then the XRD pattern was measured using an X-ray powder diffractometer (D8 ADVANCE manufactured by Bruker Corporation) with a step width of 0.02 deg, scan speed of 2.5 s/step, acceleration voltage of 40 kV, and acceleration current of 40 mA. Cu-K$\alpha$ was used as the X-ray source. In the obtained XRD pattern, the peak appearing in the range of $2\theta = 17.50$ to 19.00° was defined as the peak of the (002) plane, and the peak appearing in the range of $2\theta = 20.00$ to 20.42° was defined as the peak of the (110) plane, and the intensity ratio of the peak diffraction intensity $I_{002}$ (peak height) of the peak on the (002) plane to the peak diffraction intensity $I_{110}$ (peak height) of the peak on the (110) plane was defined as the XRD index.

[BET specific surface area]

The BET specific surface area was determined by the nitrogen adsorption method using a fully automatic specific surface area analyzer (Macsorb HM-1201 manufactured by Mountech Co., Ltd.) according to the method specified in JIS-Z-8830:2013.

[Resin viscosity]

A composition was obtained by mixing 75 parts by mass of aluminum hydroxide powder and 25 parts by mass of polyol resin mixture at 2000 rpm for 1 minute using a planetary centrifugal mixer (Awatori Rentaro ARV-310, manufactured by THINKY CORPORTION). A parallel plate of 30 mm in diameter was mounted on a dynamic viscoelasticity measuring device (Rheosol-G3000) and the above composition was placed on the plate. Resin viscosity at a shear rate of 40 s$^{-1}$ was measured after the parallel plate was allowed to stand for 10 minutes under the conditions of a gap of 1 mm and a temperature of 50 °C.

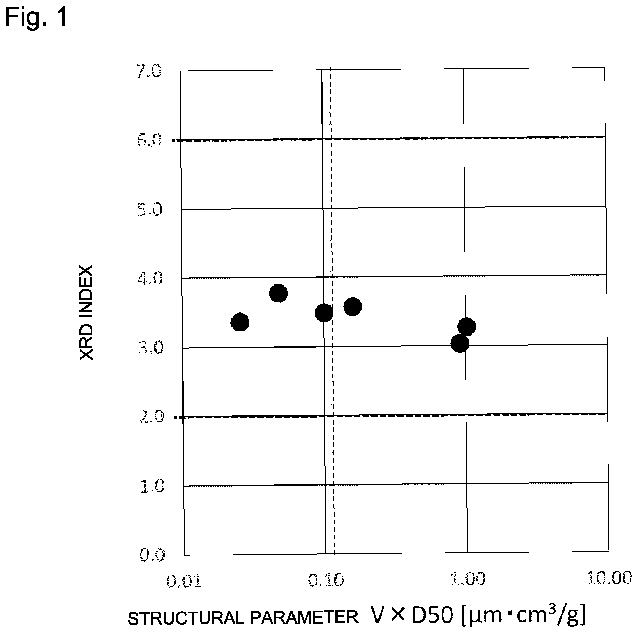

The structural parameters shown in Table 1 are plotted on the horizontal axis and the XRD indices on the vertical axis for Examples 1 to 3 and Comparative Examples 1 to 3, and are shown in Figure 1.

[SEM image]

SEM images were taken for the aluminum hydroxide powder in Examples and Comparative examples. The SEM images are shown in Figure 2A through Figure 3B. The measurement conditions for SEM images were as follows. The powder was sprinkled using a spatula onto a conductive carbon tape fixed to a cylindrical sample stand to prepare a sample for observation. The particle appearance was observed as a backscattered electron image using a tabletop microscope Miniscope (R) TM4000 (Hitachi High-Tech Corporation) at an acceleration voltage of 15 kV. The microstructure of the abrasion state was observed as a secondary electron image using a field emission scanning electron microscope S-5500 (Hitachi High-Tech Corporation) at an acceleration voltage of 1 kV. Magnification was set at 500$\times$ or 100000$\times$.

Table 1

| | D10 | D50 | D90 | Specific mesopore volume | Structural parameter | XRD index | Particle size distribution | BET specific surface area | Resin viscosity (75mass%) |
|---|---|---|---|---|---|---|---|---|---|
| | | | | V | V×D50 | $I_{002}/I_{110}$ | (D90-D10) /D50 | | |
| | μm | μm | μm | cm³/g | μm·cm³/g | - | - | m²/g | Pa·s |
| Example 1 | 62 | 83 | 121 | 0.011 | 0.91 | 3.1 | 0.7 | 2.9 | 29 |
| Example 2 | 2 | 11 | 19 | 0.015 | 0.16 | 3.6 | 1.6 | 2.1 | 25 |
| Example 3 | 43 | 73 | 113 | 0.014 | 1.0 | 3.2 | 1.0 | 2.1 | 23 |
| Comparative Example 1 | 64 | 85 | 124 | 0.0003 | 0.03 | 2.6 | 0.7 | 0.07 | 67 |
| Comparative Example 2 | 2 | 11 | 20 | 0.0093 | 0.10 | 2.8 | 1.7 | 1.3 | 52 |
| Comparative Example 3 | 1.2 | 5.3 | 20 | 0.0091 | 0.050 | 3.2 | 3.6 | 1.5 | 43 |

From the results in Table 1, the following considerations can be made.

All of Examples 1 to 3 are the examples that satisfy all of the requirements specified in the embodiments of the present invention, and were able to sufficiently suppress increase in resin viscosity compared to the Comparative Examples.

On the contrary, Comparative Examples 1 to 3 are examples in which the structural parameters are out of the range specified in the embodiments of the present invention, and were not able to sufficiently suppress an increase in resin viscosity compared to the Examples.

From the SEM image (500×) of Comparative Example 1 shown in Figure 3A, it was confirmed that the angular protrusions and deep recesses are present in the raw material aluminum hydroxide particles 100 without abrasive agitation.

In contrast, from the SEM images (500×) of Example 1 and Example 3 shown in Figure 2A and Figure 2B, it was confirmed that the abrasive treatment (abrasive agitation) rounded off the angular protrusions and filled in the deep recesses (with abrasion particles), resulting in the aluminum hydroxide particles 10 that have become rounded as a whole. In addition, from the SEM images (100000x) of Example 1 and Example 3 shown in Figure 2A and Figure 2B, it was confirmed that fine powder (abrasion particles 30) adhered to the surface of the aluminum hydroxide particles 10.

**Claims**

1.    An inorganic aluminum compound powder that satisfies the following formula (1):

$$V \times D50 \geq 0.11 \ (1),$$

wherein:

V is a specific mesopore volume of the inorganic aluminum compound powder (cm³/g), and
D50 is a particle size (μm) at which a cumulative frequency measured from a fine-grained side reaches 50% by volume in a volume-based particle size distribution of the inorganic aluminum compound powder.

2.    The inorganic aluminum compound powder according to claim 1, which is an aluminum hydroxide powder.

3.    The inorganic aluminum compound powder according to claim 2, which satisfies the following formula (2):

$$2.0 \leq I_{002}/I_{110} \leq 6.0 \ (2)$$

wherein:

$I_{110}$ and $I_{002}$ are peak diffraction intensities of a (110) plane and a (002) plane of aluminum hydroxide in an XRD pattern, respectively.

4. The inorganic aluminum compound powder according to any one of claims 1 to 3, wherein

D50 is 5 $\mu$m or more and 130 $\mu$m or less, and
a BET specific surface area is 0.5 $m^2$/g or more.

## Fig. 1

# Fig. 2A

EXAMPLE 1 (MAGNIFICATION: 500×)

TM4000 15kV 10.5mm X500 BSE L          100μm

EXAMPLE 1 (MAGNIFICATION: 100000×)

S5500 1.0kV x100k SE          500nm

## Fig. 2B

EXAMPLE 3 (MAGNIFICATION: 500×)

EXAMPLE 3 (MAGNIFICATION: 100000×)

## Fig. 3A

COMPARATIVE EXAMPLE 1
(MAGNIFICATION: 500×)

200

100

TM4000 15kV 10.6mm X500 BSE L · · · · · · 100μm

COMPARATIVE EXAMPLE 1
(MAGNIFICATION: 100000×)

200

S5500 1.0kV x100k SE · · · · · · · · · 500nm

## Fig. 3B

COMPARATIVE EXAMPLE 2
(MAGNIFICATION: 100000×)

COMPARATIVE EXAMPLE 3
(MAGNIFICATION: 100000×)

**REFERENCES CITED IN THE DESCRIPTION**

**Patent documents cited in the description**

- JP 2001322813 A
- JP 2023009506 A